# EUROPÄISCHE PATENTSCHRIFT

(11) **EP 1 342 016 B1**
(45) Veröffentlichungstag und Bekanntmachung des Hinweises auf die Patenterteilung: **27.10.2004**
(21) Anmeldenummer: 01270187.6
(22) Anmeldetag: 21.11.2001
(51) Int. Cl.: F16C 33/12, F16C 9/04

(54) **PLEUELLAGERSCHALE**
BIG END BEARING SHELL
COQUILLE DE COUSSINET DE BIELLE

(30) Priorität: 16.12.2000 DE 10062876
(43) Veröffentlichungstag der Anmeldung: 10.09.2003
(73) Patentinhaber: KS Gleitlager GmbH, 68789 St. Leon-Rot (DE)
(72) Erfinder: RUBEL, Herbert, 74889 Sinsheim (DE); SCHUBERT, Werner, 69168 Wiesloch (DE)
(74) Vertreter: Dreiss, Fuhlendorf, Steimle & Becker
(86) Internationale Anmeldenummer: PCT/EP2001/013490
(87) Internationale Veröffentlichungsnummer: WO 2002/048563

(56) Entgegenhaltungen:
- DE-C- 19 857 757
- US-A- 5 116 692
- US-A- 5 334 460
- US-A- 5 939 215

## Beschreibung

Die Erfindung betrifft eine Pleuellagerschale für ein Pleuel aus Titan oder Titanlegierung mit einer Trägerschicht aus einem Stahlwerkstoff und einer Gleitschicht für die Kurbelwelle.

US-A-5,116,692 offenbart einen Schichtverbundwerkstoff für eine Pleuellagerschale mit einer Trägerschicht aus einem Stahlwerkstoff und einer Gleitschicht für die Kurbelwelle, wobei auf den Rücken der Trägerschicht eine 0,1 bis 5 µm dicke Schicht aus Zinn oder Zinn-Legierung galvanisch aufgebracht ist.

US-A-5,334,460 offenbart ebenfalls eine Pleuellagerschale mit einer Trägerschicht aus einem Stahlwerkstoff und einer Gleitschicht für die Kurbelwelle, wobei eine bis zu 3 µm dicke Schicht einer zinnhaltigen Bleilegierung auf den Rücken der Trägerschicht galvanisch aufgebracht ist. Eine Ausführungsform nennt eine bis zu 3 µm dicke Schicht aus Zinn, Blei oder einer Legierung hiervon, die auf den Rücken der Trägerschicht aufplattiert ist.

Gemäß DE-A-198 57 757 C1 wurde bei einer Kurbelwellen- oder Pleuellagerschale der Vorschlag unterbreitet, auf dem Rücken der Trägerschicht aus Stahl eine 10-50 µm dicke Schicht PFA aufzubringen.

Wenn Pleuellagerschalen mit einer Trägerschicht aus Stahl in der großen Öffnung eines Pleuels aus Titan oder Titanlegierung für einen Kraftfahrzeugmotor montiert werden und der Stahlrücken der Trägerschicht gegen die Titanoberfläche des Pleuels anliegt, so kommt es infolge von Mikrobewegungen im Betrieb des Motors zu Reibkorrosion und Reibfraß.

Der vorliegenden Erfindung liegt die Aufgabe zugrunde, eine Pleuellagerschale für ein Pleuel aus Titan oder Titanlegierung zu schaffen, welche den im Betrieb auftretenden Belastungen standhält und bei der die vorstehend geschilderten Nachteile nicht auftreten.

Diese Aufgabe wird bei Pleuellagerschalen der gattungsgemäßen Art erfindungsgemäß gelöst, indem auf den Rücken der Trägerschicht, also auf die von der Gleitschicht abgewandte Seite der Trägerschicht, eine 10 bis 50 µm dicke Schicht aus einem Zinnbronze-Werkstoff aufplattiert ist.

Es hat sich überraschenderweise herausgestellt, dass durch die vorzugsweise direkt auf die Trägerschicht aus Stahlwerkstoff aufplattierte Zinnbronze-Schicht das unerwünschte Auftreten von Reibkorrosion und Reibfraß und damit einhergehendem Verschleiß und Zerstörung des Pleuels sowie der Lagerschalen vermieden werden kann.

Bei dem Zinnbronze-Werkstoff handelt es sich vorzugsweise um eine CuSn(4-8)-Legierung, wie sie ansich aus DIN 17662 bekannt ist. Die Legierung kann außer Kupfer und Zinn noch bis 0,1 Gew.-% Eisen, bis 0,3 Gew-% Nickel, bis 0,05 Gew.-% Pb, bis 0,3 Gew.-% Zn und sonstige Verunreinigungen, deren Gesamtanteil aber 0,2 Gew.-% nicht übersteigen, enthalten.

Es wird angenommen, dass durch den Zinnanteil des auf den Rücken der Trägerschicht vorzugsweise direkt aufplattierten Zinnbronze-Werkstoffs eine höhere Korrosionsbeständigkeit erreicht werden kann, als dies beispielsweise bei einer reinen Kupferbeschichtung der Fall wäre. Außerdem erweist sich die galvanische Abscheidung einer Kupferbeschichtung als sehr aufwendig und zeitraubend, und es erfordert einen zusätzlichen Aufwand, die Beschichtung nur einseitig aufzubringen. Es muss ferner damit gerechnet werden, dass Kupfer mit den agressiven Bestandteilen moderner Motoröle reagiert und sich als nicht hinreichend beständig erweist.

Durch den erfindungsgemäßen Einsatz einer Schicht aus einem Zinnbronze-Werkstoff, vorzugsweise der Zusammensetzung CuSn(4-8), insbesondere der Legierung CuSn6, werden hervorragende Ergebnisse im Motorbetrieb erzielt. Probleme im Hinblick auf Reibkorrosion und Reibfraß treten nicht auf, und die Stabilitätsvorteile eines Stahl/Verbund-Lagerwerkstoffs werden genutzt.

Die mit der Oberfläche der Kurbelwelle zusammenwirkende Gleitschicht kann aus einer vorzugsweise aufplattierten Aluminium-Zinn- oder einer Aluminium-Zink-Legierung gebildet sein. Bevorzugte Gleitschicht-Legierungen sind AlZn(1-8) und AlSn(6-25), insbesondere AlSn(15-20).

Aber auch eine Gleitschicht aus einer aufgesinterten Bleibronze-Schicht erweist sich für eine Pleuellagerschale als besonders geeignet. Bevorzugte Legierungen sind CuPb(9-27)Sn(2-11), insbesondere eine CuPb20Sn2 und CuPb24Sn4-Legierung.

Es kann sich desweiteren als vorteilhaft erweisen, wenn auf die Bleibronze-Schicht eine sogenannte Overlay-Beschichtung, beispielsweise nach ISO 4383, aufgebracht wird. Beispielsweise erweisen sich galvanisch aufgebrachte Overlay-Schichten aus den Legierungen PbSn10Cu(1,5-7), insbesondere PbSn10Cu2 oder PbSn10Cu6, als besonders vorteilhaft, die vorzugsweise auf eine zuvor auf die Bleibronze-Schicht galvanisch aufgebrachte Nickelsperrschicht abgeschieden wird. Es kommt aber auch eine aufgesputterte Overlay-Beschichtung aus AlSn20Cu(1-2) in Frage, die vorzugsweise auch auf eine Nickelsperrschicht aufgebracht wird.

Die Erfindung erweist sich als besonders vorteilhaft, da zinnbronzeplattierte Stahlbänder zur Herstellung der Pleuellagerschalen Verwendung finden können, was die Herstellung der erfindungsgemäßen Pleuellagerschalen sehr stark vereinfacht. Es wird daher auch für die Verwendung eines zinnbronzeplattierten Stahlbands mit einer ein- oder beidseitigen 10-50 µm dicken Zinnbronze-Schicht zur Herstellung einer Pleuellagerschale für ein Pleuel aus Titan oder Titanlegierung mit einer Trägerschicht aus einem Stahlwerkstoff und einer Gleitschicht für die Kurbelwelle Schutz beansprucht, wobei das zinnbronzeplattierte Stahlband die Trägerschicht der Pleuellagerschale bildet und mit der Gleitschicht beschichtet wird und sodann zur Bildung der Pleuellagerschalen in Abschnitte getrennt wird, wobei die zinnbronzeplattierte Seite der Trägerschicht den Rücken der Lagerschale bildet (Anspruch 11). Ferner wird für ein Pleuel aus Titan oder Titanlegierung mit Pleuellagerschalen der vorstehend beschriebenen Art Schutz beansprucht (Anspruch 12).

Es wird ausdrücklich darauf hingewiesen, dass auch beidseitig zinnbronzeplattierte Stahlbänder Verwendung finden können. Beispielsweise kann eine Bleibronze-Schicht direkt auf die aufplattierte Zinnbronze-Schicht aufgebracht, vorzugsweise aufgesintert werden. Eine Gleitschicht aus Aluminium-Zink-Legierung oder Aluminium-Zinn-Legierung wird vorzugsweise auf ein nur einseitig plattiertes Stahlband unter Vermittlung einer Reinaluminiumschicht aufgebracht, vorzugsweise aufplattiert.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: ein erfindungsgemäßes Pleuel mit erfindungsgemäßen Pleuellagerschalen im großen Pleuelauge;
- Figur 2: eine schematische Schnittansicht (nur teilweise) durch eine Pleuellagerschale gemäß einer ersten Ausführungsform der Erfindung; und
- Figur 3: eine schematische Schnittansicht (nur teilweise) durch eine Pleuellagerschale nach einer zweiten Ausführungsform der Erfindung.

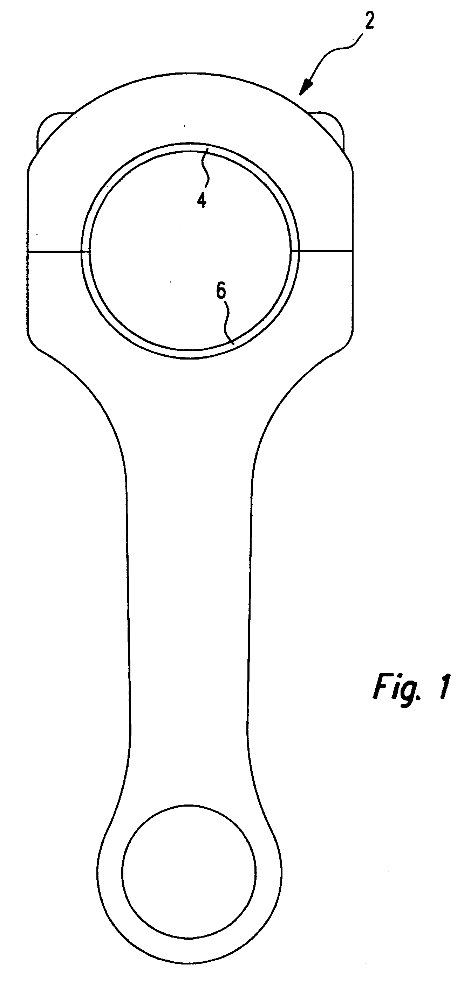

Figur 1 zeigt ein erfindungsgemäßes Kraftfahrzeugpleuel 2 aus Titan oder Titanlegierung mit im großen Pleuelauge montierten Pleuellagerschalen 4, 6 zur Lagerung des Pleuels an der nicht dargestellten Kurbelwelle eines Motors.

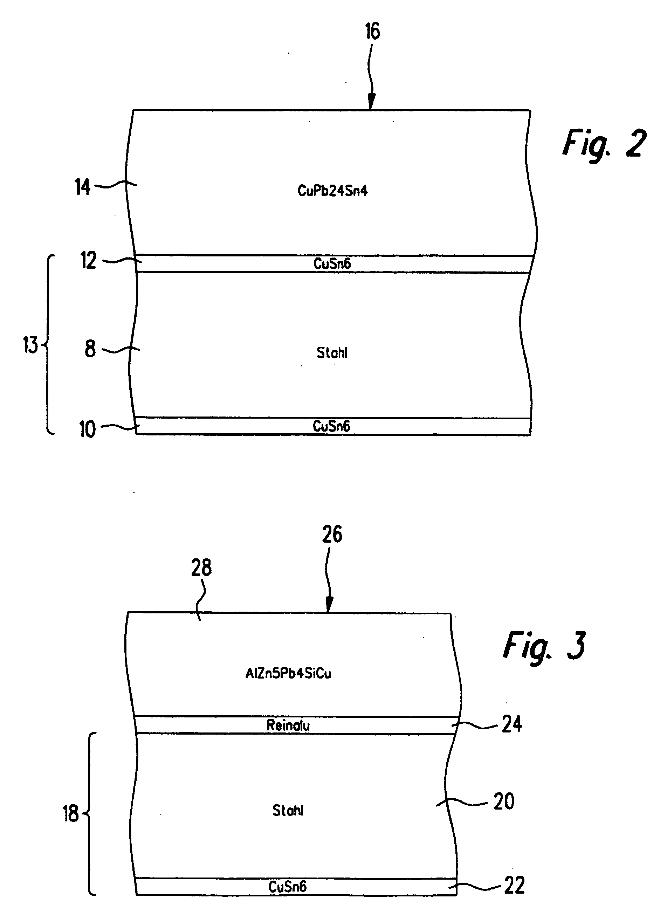

Die Figuren 2 und 3 zeigen den Aufbau zweier erfindungsgemäßer Pleuellagerschalen, die, wie die Pleuellagerschalen 4 und 6, in einem Pleuel aus Titan oder Titanlegierung zum Einsatz kommen können, ohne dass Reibkorrosion oder Reibfraß auftreten.

Der in Figur 2 dargestellte Schichtenaufbau zeigt eine Trägerschicht 8 aus Stahl, die beidseitig eine auf die Trägerschicht 8 aufplattierte Schicht aus einem Zinnbronze-Werkstoff in Form der Legierung CuSn6 aufweist.

Dieser Schichtenverbund 8, 10, 12 wird von einem endlosen beidseits plattierten Stahlband 13 als Ausgangsmaterial gefertigt. Im Anschluss hieran zeigt Figur 2 eine aufgesinterte Bleibronze-Schicht aus CuPb24Sn4-Legierung, welche die Gleitschicht 16 der Pleuellagerschale bildet. Auf die Gleitschicht 16 ist vorzugsweise (nicht dargestellt) unter Zwischenordnung einer Nickelsperrschicht eine Overlay-Beschichtung, beispielsweise in Form der Legierung PbSn10Cu2, aufgebracht.

Bei der Herstellung des Schichtenaufbaus zur Bildung der erfindungsgemäßen Pleuellagerschale nach Figur 2 wurde das beidseitig plattierte Stahlband 15 gewalzt und es wurde die Gleitschicht 16 aufgesintert. Der fertig gesinterte und gewalzte Schichtenaufbau, der in Figur 2 nicht maßstabsgemäß dargestellt ist, zeigt eine Dicke der Gleitschicht von 0,42 mm, eine Dicke der Zinnbronze-Schichten 10, 12 von 0,035 mm und eine Dicke der Stahlträger-Schicht 8 von 1,02 mm. Es ergaben sich Härtewerte der Gleitschichtoberfläche 16 von 85 HB und eine Härte der Stahlträger-Schicht 8 (nach Abtragen der Zinnbronze-Schicht 10 von 163 HB).

Bei dem in Figur 3 ersichtlichen Aufbau der erfindungsgemäßen Pleuellagerschale kam ein einseitig mit einem Zinnbronze-Werkstoff plattiertes Stahlband 18 zum Einsatz, welches die Trägerschicht 20 der Pleuellagerschale bildet, wobei deren walzplattierte Zinnbronze-Schicht 22 wiederum von einer CuSn6-Legierung gebildet ist. Auf die der Zinnbronze-Schicht gegenüberliegende Seite der Trägerschicht 20 ist unter Zwischenordnung einer Reinaluminiumschicht 24 eine Gleitschicht 26 aus einer aufplattierten AlZn5Pb4SiCu-Schicht 28 gebildet. Zur Herstellung eines derartigen Schichtenaufbaus zur Bildung einer erfindungsgemäßen Pleuellagerschale hätte auch als Ausgangsmaterial ein beidseitig beschichtetes Stahlband verwendet werden können, dessen aufplattierte Schicht aus Zinnbronze dann einseitig wieder entfernt worden ist.

## Patentansprüche

1. Pleuellagerschale (4, 6) für ein Pleuel (2) aus Titan oder Titanlegierung mit einer Trägerschicht (8, 20) aus einem Stahlwerkstoff und einer Gleitschicht (16, 26) für die Kurbelwelle, wobei auf den Rücken der Trägerschicht (8, 20) eine 10-50 µm dicke Schicht (10, 22) aus einem Zinnbronze-Werkstoff aufplattiert ist.

2. Pleuellagerschale nach Anspruch 1, **dadurch gekennzeichnet, dass** der Zinnbronze-Werkstoff eine CuSn(4-8)-Legierung aufweist.

3. Pleuellagerschale nach Anspruch 1 oder 2, **dadurch gekennzeichnet, dass** die Gleitschicht (26) aus einer aufplattierten Aluminium-Zinn- oder Aluminium-Zink-Legierung gebildet ist.

4. Pleuellagerschale nach Anspruch 3, **dadurch gekennzeichnet, dass** die Aluminium-Zink-Legierung eine AlZn(1-8)-Legierung ist.

5. Pleuallagerschale nach Anspruch 3, **dadurch gekennzeichnet, dass** die Aluminium-Zinn-Legierung eine AlSn(6-25)-Legierung ist.

6. Pleuellagerschale nach Anspruch 5, **dadurch gekennzeichnet, dass** die Aluminium-Zinn-Legierung eine Alsn(15-21)-Legierung ist.

7. Pleuellagerschale nach Anspruch 1 oder 2, **dadurch gekennzeichnet, dass** die Gleitschicht (16) aus einer aufgesinterten Bleibronze-Schicht gebildet ist.

8. Pleuellagerschale nach Anspruch 7, **dadurch gekennzeichnet, dass** die Bleibronze eine CuPb(9-27)Sn(2-11)-Legierung ist.

9. Pleuellagerschale nach Anspruch 7 oder 8, **dadurch gekennzeichnet, dass** auf die Bleibronze-Schicht eine Overlay-Beschichtung aufgebracht ist.

10. Pleuellagerschale nach Anspruch 7, 8 oder 9, **dadurch gekennzeichnet, dass** zwischen der Bleibronze-Schicht (14) und der Trägerschicht (8) eine auf die Trägerschicht (8) aufplattierte Schicht (12) aus einem Zinnbronze-Werkstoff vorgesehen ist.

11. Verwendung eines zinnbronzeplattierten Stahlbands (18) mit einer ein- oder beidseitigen 10-50µm dicken Zinnbronze-Schicht (10, 12, 22) zur Herstellung einer Pleuellagerschale (4, 6) für ein Pleuel (2) aus Titan oder Titanlegierung mit einer Trägerschicht (8, 20) aus einem Stahlwerkstoff und einer Gleitschicht (16, 26) für die Kurbelwelle, wobei das zinnbronzeplattierte Stahlband (18) die Trägerschicht (8, 20) der Pleuellagerschale (4, 6) bildet und mit der Gleitschicht (16, 26) beschichtet wird und sodann zur Bildung der Pleuellagerschalen (4, 6)in Abschnitte getrennt wird, wobei die mit Zinnbronze (10, 22) plattierte Seite der Trägerschicht (8, 20) den Rücken der Lagerschale bildet.

12. Pleuel (2) aus Titan oder Titanlegierung mit im großen Pleuelauge montierten Pleuellagerschalen (4, 6) nach einem der Ansprüche 1-10.

## Claims

1. Big end bearing shell (4, 6) for a connecting rod (2) made of titanium or a titanium alloy comprising a support layer (8, 20) made of a steel material and a sliding layer (16, 26) for the crankshaft, wherein a layer (10, 22) made of a tin bronze material having a thickness between 10 and 50 µm is clad onto the back of the support layer (8, 20).

2. Big end bearing shell according to claim 1, **characterised in that** the tin bronze material comprises a CuSn(4-8) alloy.

3. Big end bearing shell according to claim 1 or 2, **characterised in that** the sliding layer (26) is formed from a clad aluminium tin or aluminium zinc alloy.

4. Big end bearing shell according to claim 3, **characterised in that** the aluminium zinc alloy is an AlZn(1-8) alloy.

5. Big end bearing shell according to claim 3, **characterised in that** the aluminium tin alloy is an AlSn(6-25) alloy.

6. Big end bearing shell according to claim 5, **characterised in that** the aluminium tin alloy is an AlSn(15-21) alloy.

7. Big end bearing shell according to claim 1 or 2, **characterised in that** the sliding layer (16) is formed from a sintered lead bronze layer.

8. Big end bearing shell according to claim 7, **characterised in that** the lead bronze is a CuPb(9-27)Sn(2-11) alloy.

9. Big end bearing shell according to claim 7 or 8, **characterised in that** an overlay coating is deposited onto the lead bronze layer.

10. Big end bearing shell according to claim 7, 8 or 9, **characterised in that** a layer (12) made of a tin bronze material, which is clad onto the support layer (8), is provided between the lead bronze layer (14) and the support layer (8).

11. Use of a tin bronze-clad steel strip (18) comprising a tin bronze layer (10, 12, 22) disposed on one or both sides having a thickness between 10 and 50 µm, for producing a big end bearing shell (4, 6) for a titanium or titanium alloy connecting rod (2), comprising a support layer (8, 20) made of a steel material and a sliding layer (16, 26) for the crankshaft, wherein the tin bronze-clad steel strip (18) forms the support layer (8, 20) of the big end bearing shell (4, 6) and is coated with the sliding layer (16, 26) and is subsequently divided into sections for forming the big end bearing shells (4, 6), wherein the side of the support layer (8, 20) clad with tin bronze (10, 22) forms the back of the bearing shell.

12. Connecting rod (2) made of titanium or a titanium alloy comprising big end bearing shells (4, 6) mounted in the large connecting rod eye according to any one of claims 1 to 10.

## Revendications

1. Coquille de coussinet de bielle (4, 6) pour bielle (2) en titane ou alliage de titane, avec une couche support (8, 20) en acier et une couche de glissement (16, 26) pour le vilebrequin, une couche (10, 22) de bronze ordinaire d'une épaisseur de 10 à 50 µm étant plaquée sur le dos de la couche support (8, 20).

2. Coquille de coussinet de bielle selon la revendication 1, **caractérisée en ce que** le bronze ordinaire est un alliage de CuSn (4-8).

3. Coquille de coussinet de bielle selon la revendication 1 ou la revendication 2, **caractérisée en ce que** la couche de glissement (26) est formée d'un alliage d'aluminium et d'étain ou d'aluminium et de zinc plaqué.

4. Coquille de coussinet de bielle selon la revendication 3, **caractérisée en ce que** l'alliage d'aluminium et de zinc est un alliage AlZn (1-8).

5. Coquille de coussinet de bielle selon la revendication 3, **caractérisée en ce que** l'alliage d'aluminium et d'étain est un alliage AnSn (6-25).

6. Coquille de coussinet de bielle selon la revendication 5, **caractérisée en ce que** l'alliage d'aluminium et d'étain est un alliage AlSn (15-21).

7. Coquille de coussinet de bielle selon la revendication 1 ou la revendication 2, **caractérisée en ce que** la couche de glissement (16) est formée d'une couche de bronze au plomb agglomérée par frittage.

8. Coquille de coussinet de bielle selon la revendication 7, **caractérisée en ce que** le bronze au plomb est un alliage CuPb(9-27)Sn(2-11).

9. Coquille de coussinet de bielle selon la revendication 7 ou la revendication 8, **caractérisée en ce qu'**un revêtement antifriction est appliqué sur la couche de bronze au plomb.

10. Coquille de coussinet de bielle selon la revendication 7, 8 ou 9, **caractérisée en ce qu'**entre la couche de bronze au plomb (14) et la couche support (8) est prévue une couche (12) de bronze ordinaire plaquée sur la couche support (8).

11. Utilisation d'un ruban d'acier (18) plaqué au bronze ordinaire avec, sur une ou deux faces, une couche de bronze ordinaire (10, 12, 22) épaisse de 10 à 50 µm, pour fabriquer une coquille de coussinet de bielle (4, 6) pour bielle (2) en titane ou alliage de titane, avec une couche support (8, 20) en acier et une couche de glissement (16, 26) pour le vilebrequin, le ruban d'acier (18) plaqué au bronze ordinaire formant la couche support (8, 20) de la coquille de coussinet de bielle (4, 6) et étant revêtu de la couche de glissement (16, 26) avant d'être découpé en tronçons pour former les coquilles de coussinet de bielle (4, 6), la face plaquée au bronze ordinaire (10, 22) de la couche support (8, 20) formant le dos de la coquille de coussinet.

12. Bielle (2) en titane ou alliage au titane, avec des coquilles de coussinet de bielle (4, 6) selon l'une des revendications 1 à 10 montées dans la tête de bielle.
